# EUROPEAN PATENT APPLICATION

(11) **EP 0 751 455 A1**
(43) Date of publication of application: **02.01.1997**
(21) Application number: 96304733.7
(22) Date of filing: 26.06.1996
(51) Int. Cl.: G06F 3/02, G06F 1/16, G06K 11/18

(54) **A portable computer and a keyboard therefor**

(30) Priority: 29.06.1995 JP 163237/95
(71) Applicant: INTERNATIONAL BUSINESS MACHINES CORPORATION, Armonk, N.Y. 10504 (US)
(72) Inventor: Agata, Hiroaki, Yokohama-shi, Kanagawa-ken (JP); Anzai, Masato, Machida-shi, Tokyo-to (JP); Ogawa, Tetsuo, Sagamihara-shi, Kanagawa-ken (JP); Mori, Shigeki, Yokohama-shi, Kanagawa-ken (JP)
(74) Representative: Burt, Roger James, Dr.

(57) **Abstract**

The object of the present invention is to provide a portable PC which has a pointing device that can be elevated and lowered, that is made compactly and light, and that has excellent usability and durability.

A portable PC and a keyboard according to the present invention comprise a mechanism for elevating and lowering a pointing device. The elevating and lowering mechanism elevates and lowers the pointing device in consonance with the position of the cover of a computer. A base portion (104) is employed to fix a pointing device (30)in place. The base portion (104) is connected to a pallet (26) of a keyboard by means of a hinge (106). The base portion (104) is driven upward by the movement of an arm (110), which interacts with the opening and the closing of the cover. The pointing device (30) that is fitted over the base portion (104) is raised so that it is higher than the adjacent keys (28) (see Fig. 7 wherein the cover is shown in the opened position).

## Description

### Field of the Invention

The present invention relates to a portable personal computer (a portable PC) and its keyboard, and more specifically, to a means for elevating and lowering a pointing device for a portable PC and for a keyboard.

### Background of the Invention

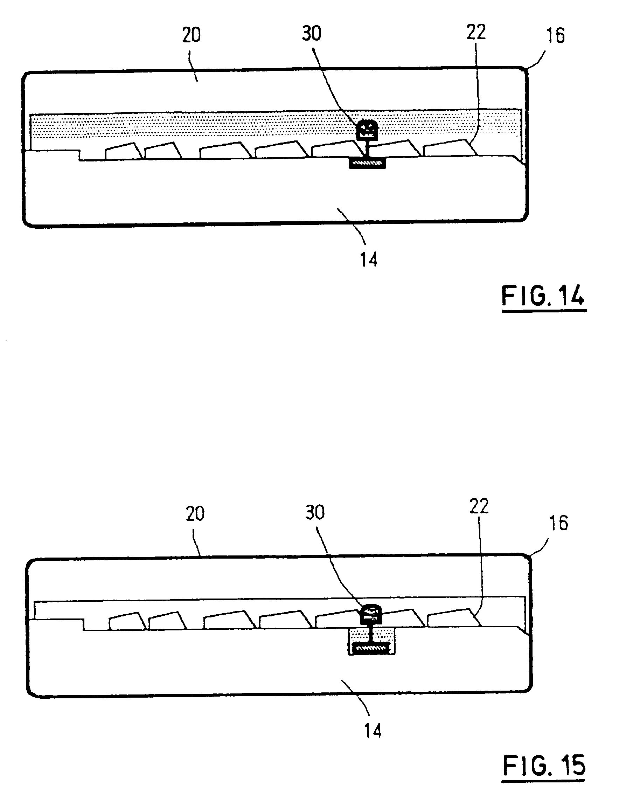

With regard to the Trackpoint pointing device ("Trackpoint" is a trademark of IBM Corp.: see Japanese Patent Application No. Hei 7-23189; for the detailed technical contents), which is one of the pointing devices that are frequently employed with notebook PCs, its operating section is so designed that it has a specific height from the view point of easy usability, and is normally located at a position 1 to 2 mm higher than the keys on a keyboard. For a notebook PC, in order to avoid interference by the operating section of a Trackpoint with an LCD when it is stored, a gap that is defined between them must be larger than the gap in a PC that has no Trackpoint. The volume of an unnecessary gap shown in Fig. 14 is about 125 cm³ for a full sized notebook PC type, such as a ThinkPad 755CX ("ThinkPad" is a trademark of IBM Corp.), and about 100 cm³ for a sub-sized notebook PC type, such as a ThinkPad 701C.

At the same time, the rigidity of a case must be increased in order to avoid the interference by the operating section of a Trackpoint with the LCD, which results from the distortion of the case. This is accompanied by an increase in the thickness and in the weight of a PC, and is a very big problem for a notebook PC that is intended to be made compactly and light.

Placing weight on the case when it is stored will cause damage to the LCD. The operating section of a Trackpoint that reduces the effect of this weighting must be protected by elastic, distal end caps in order to prevent it from damaging the LCD. The material that is used for the distal end cap of the Trackpoint is limited to one that is elastic to a degree and that resists deterioration well.

Therefore, it is difficult to design a notebook PC that is compact, light and strong against external weighting, while maintaining the ideal height in the operating section for a Trackpoint so that a user can easily use it.

The technique that enables a pointing device to be moved up and down is disclosed in "IBM TECHNICAL DISCLOSURE BULLETIN (TDB), Vol. 33, No. 9, Feb 1991, pp 428 to 430". Disclosed in the TDB is a cursor key that incorporates a track ball, which is moved up and down in consonance with the depression of the cursor key. The technique that is disclosed in the TDB does not comprise a means that elevates the operating section of a pointing device when an operation is to be performed, and lowers it when no operation is to be performed; a means that changes the height of the operating section relative to an input key that is adjacent to the pointing device; and a means that adjusts the height of the operating section relative to a plurality of input keys, all of which are features that are included in the present invention. The conventional technique, therefore, does not provide a portable PC that has an appropriate thickness and weight, and that has excellent usability and durability.

### Summary of the Present Invention

To resolve the conventional shortcomings, it is therefore one object to provide a portable PC that has appropriate thickness and weight, and excellent usability and durability by employing a Trackpoint that can be moved into storage.

According to the present invention, a portable computer comprises: a pointing device that is located among a plurality of input keys; and an elevating and lowering means for elevating, increasing in height, relative to the input keys, an operating section of the pointing device when the pointing device is to be operated, and for lowering, decreasing in the height the operating section when it is not to be operated. The height of the operating section of the pointing device, which is the highest point of the entire system, can be changed by this means.

The means for elevating and lowering the operating section of the pointing device also elevates and lowers the keyboard. The means that elevates and lowers the pointing device can be replaced with a means, as will be described in one embodiment of the invention, that elevates and lowers the pointing device by sliding it along a slope, or can be provided not only by pushing up with arms, but also by using a rack-and-pinion means to rotate a worm gear, which looks like a lipstick or a lipstick shaped glue container that intermeshes, at its top, with a gear that fixes the pointing device in place. In this case, it is preferable that the pointing device that is elevated be fixed in place by a ratchet means or a clamp. The elevating and lowering means for the pointing device need only convert, into the movement of the pointing device, the physical manipulations that are associated with the activation of a portable PC, such as the opening/closing of a cover and the turning on/off of a power switch, or manipulations that are performed especially for the elevating and the lowering of the pointing device. The means for elevating and lowering the pointing device can be provided by employing a combination of gears and by using cams and a crank means. This elevating and lowering means is operated not only by physical manipulation, such as the opening/closing of the cover, but can also be electrically operated in response to the turning on or off of a power switch, at which time either the elevation or the lowering operation is performed in response to the rotation of a motor.

The operating section of the pointing device is extended to a position that is higher than the tops of the keys on the keyboard to maintain the usability. When it is to be stored, the operating section is retracted to a position where it is lower than the tops of the keys on the keyboard. In this manner, the interference of the operating section of the pointing device with the LCD, which is due to the distortion of the case, can be prevented. While when the keyboard keys contact the LCD the keys will simply be depressed, if the operating section of the pointing device contacts the LCD, the LCD will be damaged. In this manner, the PC is closed while keyboard keys are in the depressed state. It is also possible to extend and compress the base end of the pointing device by using a worm gear, or to so install a worm gear under the slope as to adjust the degree of elevation and lowering of the pointing device.

In one embodiment of the present invention, the operating section of the pointing device is elevated and lowered by interacting with the opening and closing of a cover, which is attached to a system body so as to be freely opened and closed. The elevating and lowering means, which is coupled with a keyboard by a hinge, comprises a base portion to which the base end of a pointing device is fixed, and an arm portion that moves in such a manner as to elevate and lower the base portion. The arm portion may be formed in the shape of either a rod or a plate, which is shifted during insertion and extraction so that it elevates and lowers the base portion. As is shown in a first embodiment of the present invention, which will be described later, the base portion can be elevated and lowered by the movement of an arm that has a sloped portion.

In another embodiment of the present invention, an elevating and lowering means comprises a carrier to which the base end of a pointing device is fixed; a sloped portion for so supporting the carrier that it can be freely shifted; and interacting means for interacting with the opening and the closing of a cover to elevate and lower the carrier along the sloped portion.

In an additional embodiment of the present invention, the keyboard is divided into a plurality of keyboard sections that can be shifted, with a base portion of a pointing device, to which the base end of the pointing device is coupled, being joined to one of the keyboard sections by a hinge, so that the base portion interacts with the movement of the keyboard section and is elevated and lowered along the sloped portion.

A portable computer of the present invention comprises: a pointing device that is positioned among a plurality of input keys; and an elevating and lowering means for effecting a height change of an operating section of the pointing device relative to certain input keys, from among the plurality of input keys, that are adjacent to the pointing device.

A keyboard according to the present invention comprises: a pointing device that is positioned among a plurality of input keys; and an elevating and lowering means for effecting a height adjustment of an operating section of the pointing device relative to the input keys. In the adjustment of the relative height, not only are two levels provided for the height change, but also the height can be adjusted as a user desires.

### Brief Description of the Drawings

Embodiments of the present invention will now be described, by way of example only, with reference to the accompanying drawings, in which:
Fig. 1 is a perspective view of a portable PC according to one embodiment of the present invention with its cover closed;
Fig. 2 is a perspective view of the portable PC shown in Fig. 1 when its cover is partly opened;
Fig. 3 is a perspective view of a portable PC in another embodiment of the present invention when its cover is partly opened;
Fig. 4 is a schematic plan view of the portable PC in Fig. 2 when its cover is closed;
Fig. 5 is a schematic plan view of the portable PC in Fig. 2 when its cover is opened;
Fig. 6 is a cross sectional view of the portable PC shown in Fig. 2 when its cover is closed;
Fig. 7 is a cross sectional view of the portable PC shown in Fig. 2 when its cover is opened;
Fig. 8 is a perspective view of an elevating and lowering mechanism according to an additional embodiment of the present invention;
Fig. 9 is a schematic plan view of the portable PC in Fig. 3 when its cover is closed;
Fig. 10 is a schematic plan view of the portable PC in Fig. 3 when its cover is partly opened;
Fig. 11 is a cross sectional view of the portable PC in Fig. 3 when its cover is closed.
Fig. 12 is a cross sectional view of the portable PC in Fig. 3 when its cover is opened.
Fig. 13 is a schematic plan view of one part of the elevating and lowering mechanism shown in Figs. 4, 5, 9, and 10 that controls the movement of a pallet based on the position of a cover relative to a base.
Fig. 14 is a cross sectional view of a conventional portable PC.
Fig. 15 is a cross sectional view of a portable PC according to the present invention.

### Description of the Preferred Embodiments

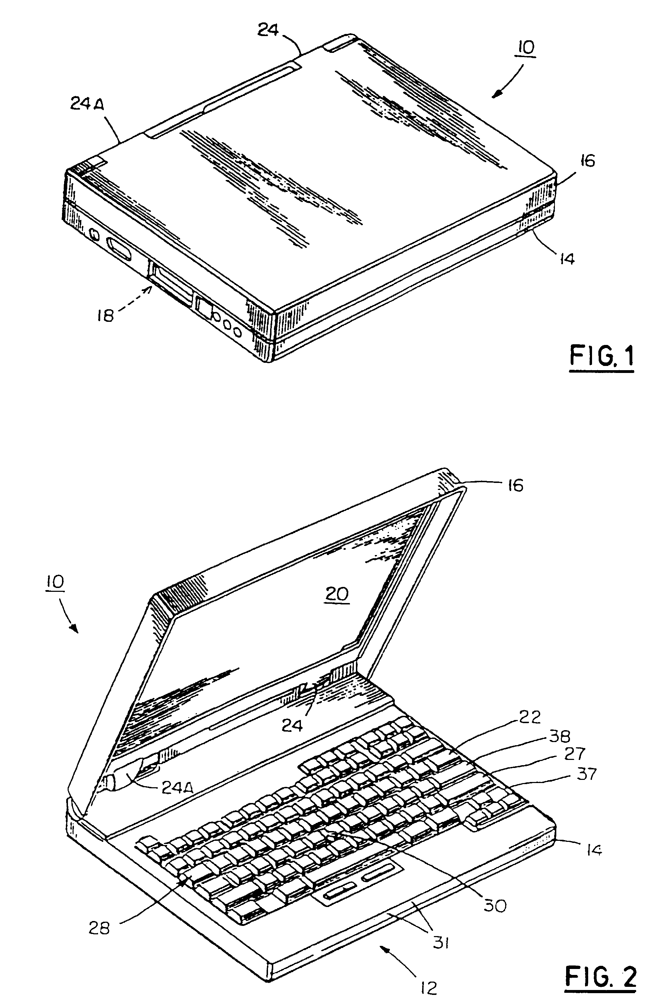

Figs. 1 though 3 are perspective views of a computer 10, which incorporates an elevating and lowering means that is related to the present invention, with a cover 16 that is set at different positions. The different illustrated examples of the present invention will be explained, but it should be noted that the mechanism of the present invention can be replaced with modified mechanisms of various shapes and types. Further, components or materials of arbitrary sizes, shapes, and types can be employed.

In Figs. 1 and 2 is shown a portable PC according to one mode of the present invention. The computer 10 is generally known also as a notebook computer. The elevating and lowering mechanism that is related to the present invention can be also incorporated in keyboards of the other types of computers, such as full-size notebook PCs, sub-notebook PCs, palmtop PCs, electronic notebooks, game machines, and desktop PCs. The computer 10 comprises a lower case 14, a cover 16, an electronic circuit 18, and a display 20. The cover 16 is attached to a system 12 at pivot joints 24 and 24A, so that the cover 16 can pivot between the closed position shown in Fig. 1 and the fully opened position. In Fig. 2 the cover 16 is shown in the intermediate position between the closed position and the fully opened position. There are multiple additional mechanisms that are known in the computer field that can be incorporated in the computer 10. For simplifying the explanation, none of these additional mechanisms will be described in this specification. The display 20 can include a desired, proper display, such as an LCD screen. The display 20 is connected to the lower side of the cover 16 and is electrically connected to the electronic circuit 18. The electronic circuit 18 is stored within the system 12 or within the cover 16, or parts of it are to be stored within both of them. The electronic circuit 18 includes an electronic processor and electronic memory. A pointing device 30 is shown when it is elevated. The pointing device 30 is electrically connected to the electronic circuit 18 by an electric cable, or by hinged portions 106 and 108, which will be described later. The full-size notebook PC shown in Figs. 1 and 2 is an example wherein IBM Japan, Ltd. applied the present invention to the ThinkPad 755 CX ("ThinkPad" is a trademark of IBM Corp.), which went on sale in Japan in May, 1995.

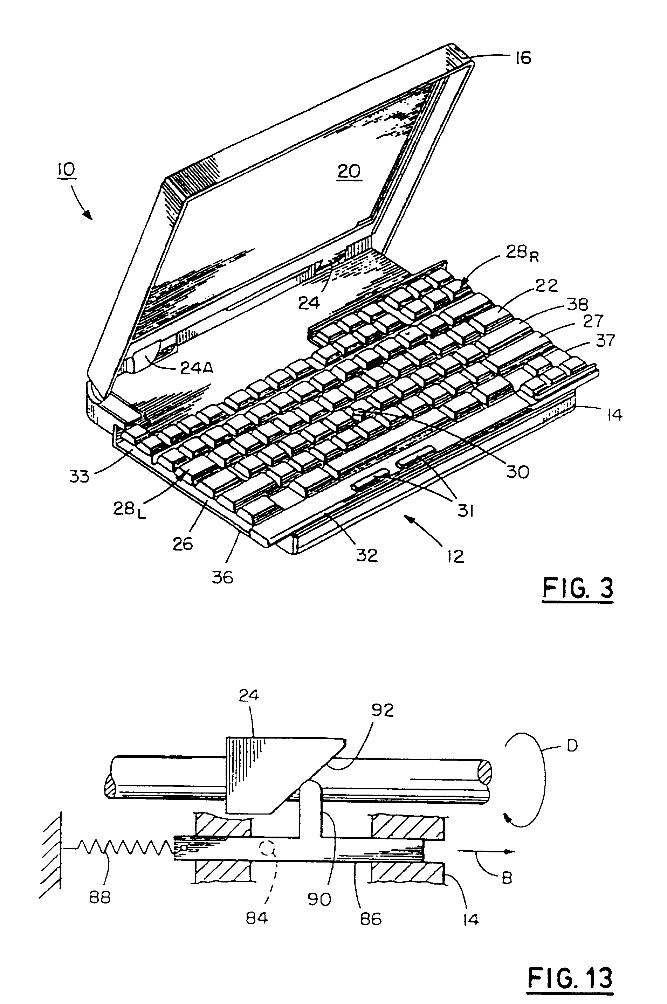

In Fig. 3 is shown a portable PC according to another mode of the present invention. A computer 10 has a keyboard assembly 22 that can be rearranged. A base portion 104 that secures a pointing device 30 is connected (not shown) at its right side to a keyboard 26 by a hinge. As in Fig. 2, the cover 16 is shown in the intermediate position, between the closed position and the fully opened position. The pointing device 30 is in the elevated state. The illustrated portable PC is a sub-notebook PC which is an example wherein IBM Japan, Ltd. applied the present invention to the ThinkPad 701C, which went on sale in Japan in May, 1995.

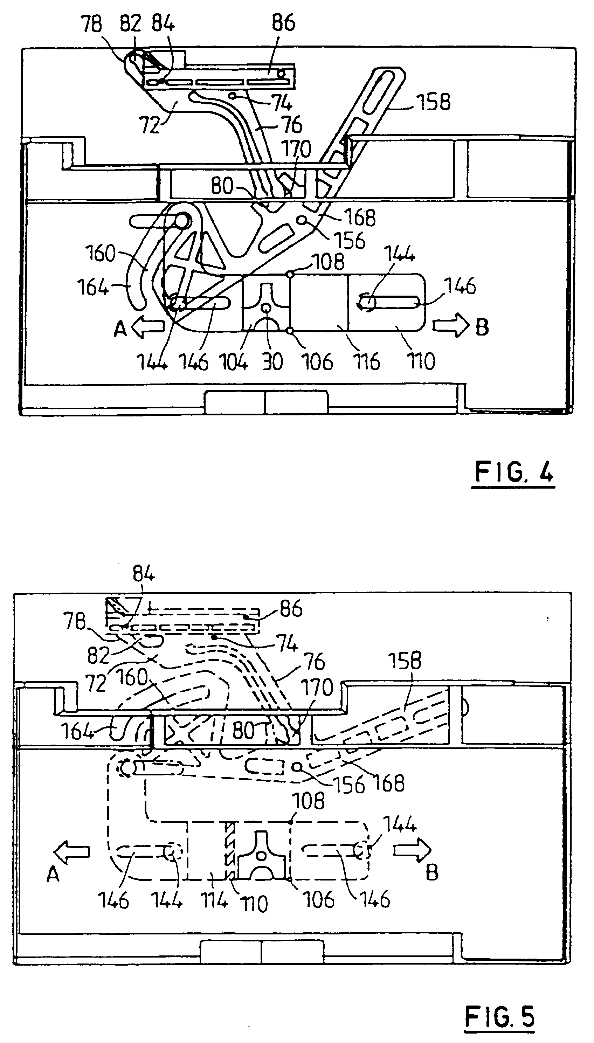

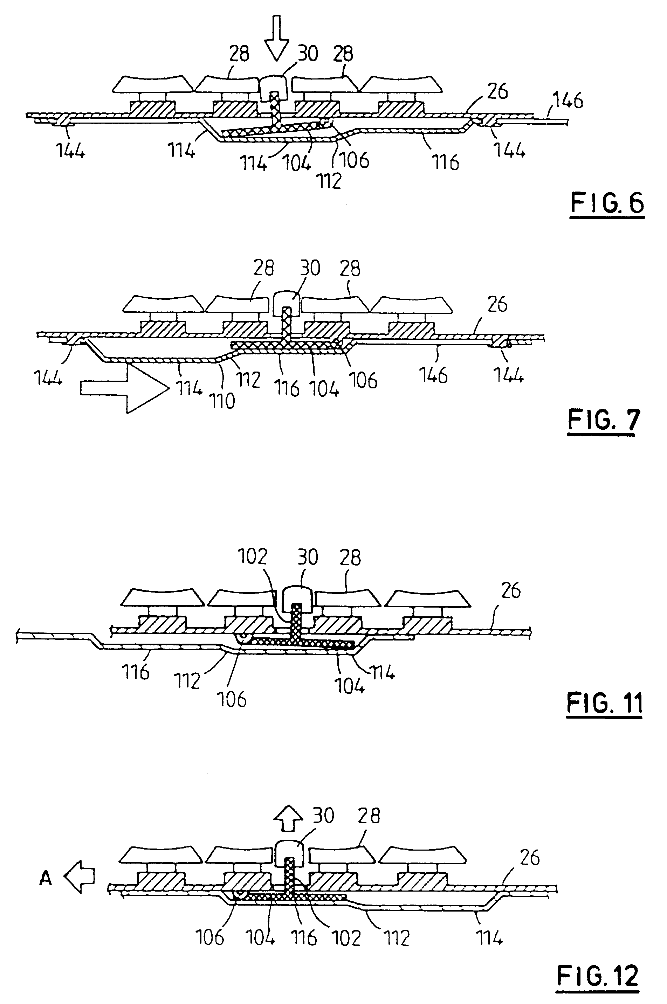

An elevating and lowering mechanism for a portable PC according to a first embodiment of the present invention will now be described while referring to Figs. 4 and 5. Fig. 4 is a schematic plan view of the portable PC in Fig. 2 in which the cover is closed. The computer 10 automatically elevates and lowers an operating section for a Trackpoint in consonance with the relative position of the cover 16 of the system 12. A first drive arm 158 in this embodiment has an end portion 164, in which is formed a guide slot 160, and a central connection area 168, in which is formed a socket area 170. The central connection area 168 is held by a pivot pin 156 around which it is pivoted. The guide slot 160 is formed in an appropriate shape so that in conjunction with a clearance slot 146 it can provide a desired operation of an arm 110 on the system 12. The base portion 104, which fixes in place the pointing device 30, is connected at the right side to the keyboard 26 by means of the hinges 106 and 108. A clearance is defined in the keyboard 26 to permit the operating section of the pointing device 30 to extend upward. The elevating and lowering mechanism in this embodiment includes a second drive arm 72. The second drive arm 72 is installed on the system 12 and is held by a pivot 74 so that it can be freely pivoted. The second drive arm 72 has a first end portion 76 and a second end portion 78. At the distal end of the first end portion 76 is formed a ball section 80 that is inserted into a socket 70 in the first drive arm 158 so as to set it in the operating state. In the second end portion 78 is formed a cam slot 82 wherein a cam pin 84 is inserted. The cam pin 84 reduces the influence of friction and provides a smoother operation at the slot 82.

Referring to Fig. 13, the cam pin 84 is extended downward from a cam slider 86. The cam slider 86 is so installed in the system 12, parallel to the rotary shaft of the cover 16, that it is slidable. The cam slider 86 is biased to the left by a tension spring 88. On the cam slider 86 is a rider section 90 that contacts a cam surface 92 of the left pivot joint 24A (see Fig. 2), by which the cover 16 is attached to the system 12. When the cover 16 is to be pivoted and thus closed from the opened position, the pivot joint 24A rotates as is indicted by the arrow D. Then, the cam surface 92 is driven against the rider section 90, the cam slider 86 is shifted to the right, as is indicated by the arrow B, and the tension spring 88 is stretched. When the cover 16 is to be pivoted from the closed position to the open position, the pivot joint 24A rotates the opposite direction. The tension spring 88 pulls the cam slider 86 in the direction that is the opposite of the direction B as the rider section 90 moves along the cam surface 92 to place the keyboard in the operating position. The force that is exerted to arrange the keyboard is only the force that is generated by the tension spring 88. This structure protects the internal mechanism when the extension of a pallet is interrupted in a third embodiment, which will be described later. This arrangement is therefore preferable for driving the cam slider 86 directly into the cover at the extended operating position.

A shifting mechanism, and the movement of the pallet from the storage position to the operating position will now be described. In Fig. 4 is shown an elevating and a lowering mechanism at the storage position. In this embodiment, the first drive arm 158 is so held by the pivot pin 156 that it can be pivoted. On the first drive arm 158 is the end portion 164 in which is formed the guide slot 160, and the central connection area 168 in which is formed the socket area 170. The central connection area 168 is so fitted around the pivot pin 156 that it can be freely pivoted.

As is described above, in Fig. 4 is shown the storage positions of the components when the cover 16 is closed. In this condition, the cam slider 86 and the cam pin 84 are positioned completely to the right by the cam surface 92 of the pivot joint 24A, which acts on the rider section. In the illustration in Fig. 5, which is a schematic diagram, as is in Fig. 4, are depicted components when the cover 16 is pivoted and opened. As is apparent from the comparison of the diagrams in Figs. 4 and 5, the cam pin 84 is shifted to the left. Thus, the second drive arm 72 pivots as is indicted by the arrow E because the centre section of the cam slot 82 is formed with an angle. Since the pivot 74 is fixed to the base 14, the first end portion 76 of the second drive arm 72 rotates the first drive arm 158 in the direction F. Due to the interaction with the guide slot 160 for the first drive arm 158, the arm 110 is driven by the first drive arm 158 in the horizontal direction indicated by B. The first drive arm 158 pivots around the pivot pin 156, while the ball section 80 of the second drive arm 72 pivots within the socket area 70 in the first drive arm 58.

As is shown in Figs. 6 and 7, as the arm 110 is shifted in the horizontal direction A, the base portion 104 is driven upward by a second shelf portion 116 via a sloped portion 112, and the operating section of the pointing device 30 is lifted. It is preferable that a positioner, such as a leaf spring, or an indentation that corresponds in shape to the base portion 104, be provided for the second shelf portion 116 in order to prevent the pointing device from wobbling while it is being manipulated. It is desirable that a Trackpoint have a mechanical fail load that is greater than approximately 3.624 Kg (8 pounds). Although, in the first embodiment the base portion 104 is connected to the keyboard 26 by means of the hinges 106 and 108, a flexible member, such as a compression coil spring or a leaf spring, can be employed to connect the base portion 104 to the keyboard 26.

The shifting of the pallet from the storage position to the operating position has been explained. To move the pallet from the operating position to the storage position, a user merely closes the cover. The elevating and lowering mechanism then automatically moves the arm 110 inversely. As the arm 110 is shifted in the horizontal direction B, the base portion 104 is moved to the first shelf portion 114 across the sloped portion 112, and as a result, the operating section of the pointing device 30 is lowered.

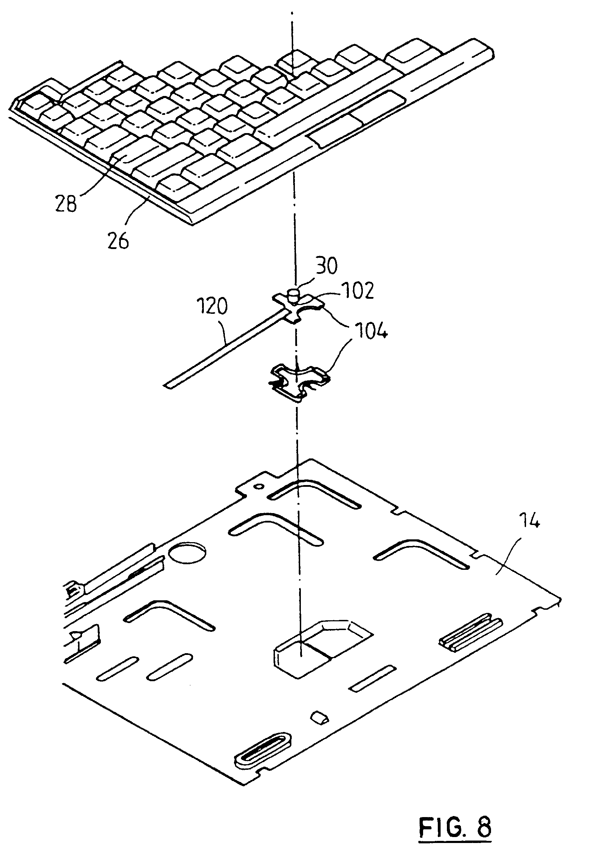

A second embodiment of the present invention will now be explained while referring to Fig. 8. The second embodiment is a replacement proposal for the first embodiment. The arm 110 shown in Figs. 4 through 7 is replaced with a carrier 120 in Fig. 8. And while the base portion 104 of the pointing device 30 is connected to the keyboard side by means of the hinges 106 and 108 in the first embodiment, it is securely fixed to the carrier 120 in the second embodiment. As the base portion 104 is elevated and lowered along a slope that is formed for the lower case, the pointing device can be lifted and lowered. Grooves are formed in the keyboard 22 to move the pointing device 30. It is desirable that, taking its characteristic into account, the carrier 120 be made of a metal, such as stainless steel, that is flexible to a degree, or of a plastic.

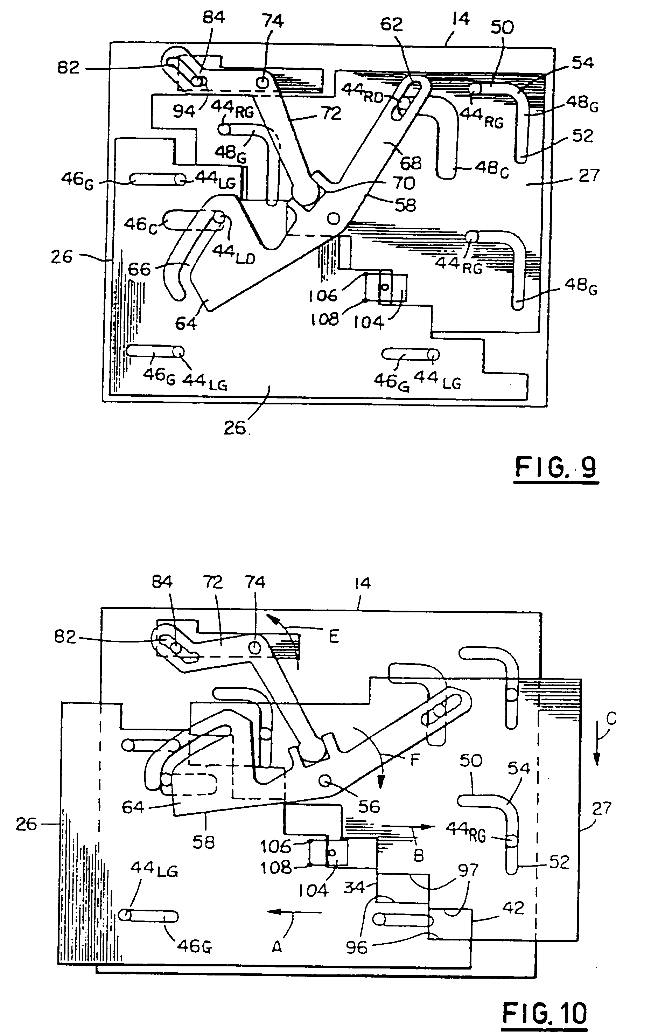

A third embodiment will now be described while referring to Figs. 9 through 12. Figs. 9 and 10 are schematic diagrams illustrating a mechanism for shifting pallets 26 and 27, and an elevating and lowering mechanism for a pointing device that is related to the present invention. Japanese Patent Application No. Hei 6-324533 should be referred to for the mechanism that moves the pallets 26 and 27. A computer 10 automatically controls the shifting of the pallets 26 and 27 between the storage positions and the operating positions in consonance with the relative position of a cover 16 on a base 14. When the cover 16 is closed, as is shown in Fig. 1, the pallets are retained in the storage position that is shown in Fig. 9. When the cover is opened a specific distance relative to the base, the pallets are sifted at the operating position, as is shown in Fig. 10.

Now, a shifting mechanism and the movement of the pallets from the storage position to the operating position will be described. In Fig. 9 is shown one part of a shifting mechanism when the pallets 26 and 27 are retracted into the storage position. The base portion 104, over which the pointing device 30 is fitted, is coupled to the left pallet 26 by hinges 106 and 108. At the storage position, a gap is defined between the left pallet 26 and the right pallet 27 for the operating section of the pointing device 30. The left pallet 26 has three guide pins 44LG that protrude downward from the bottom of a left plate 36 to prevent wobbling and that are fitted into guide slots 46G in the base 14. The left pallet 26 is also fitted around a drive pin 44LD that extends through a clearance slot 46C. The right pallet 27 has three guide pins 44RG that extend downward from the bottom of a right plate 37 to prevent wobbling. The guide pins 44RG can be so fitted into guide slots 48G in the base 14 that they are slidable, so that another type of pointing device can be provided. Such a pointing device can be moved outside the plane of the pallets 26 and 27.

The base portion 104, over which the pointing device is fitted, is connected to the left pallet 26 by means of the hinges 106 and 108. As is described above, the left pallet 26 is also fitted around the drive pin 44LD that extends through the clearance slot 46C, while the right pallet 27 has the three guide pins 44RG that extend downward from the bottom of the right plate 37 to prevent wobbling. The guide pins 44RG are so positioned in the guide slots 48G in the base 14 that they are slidable. The right pallet 27 is also fitted around a drive pin 44RD that extends through the clearance slot 48C. The guide slots 46G are elongated linearly in the horizontal direction A. The guide slots 48G are formed in an inverted L shape and have a first linearly elongated section 50 and a second linearly elongated section 52. The two sections 50 and 52 are connected to each other by a curved section 54. The first section 50 is extended in the horizonal direction B, while the second section 52 is extended in the diagonally forward direction C, relative to the first section 50. Installed on the base 14 is a pivot pin 56 around which a first drive arm 58 is so fitted that it can be pivoted.

The first drive arm 58 has a first end portion 60, in which is formed a first guide slot 62, a second end portion 64, in which is formed a second guide slot 66, and a central connection area 68, in which is formed a socket area 70. The central connection area 68 is so fitted around the pivot pin 56 that it can be freely pivoted. The drive pin 44RD, which is installed on the right pallet 27, is so positioned in the first guide slot 62 that it is slidable. The drive pin 44LD, which is installed on the left pallet 26, is so positioned in the second guide slot 66 that it can be slidable. The first and second guide slots 62 and 66 are formed in an appropriate shape, so that in unison with the clearance slots 46C and 48C and the guide slots 46G and 48G they can provide a desired manipulation for the pallets 26 and 27 on the base 14.

The shifting mechanism includes the second drive arm 72, which is so fitted around the pivot 74, which is installed on the base 14, that it can be pivoted. At the extremities of the second drive arm 72 are the first end portion 76 and the second end portion 78. At the proximal end of the first end portion 76 is formed a ball section 80 that is inserted in a socket 70 that is formed in the first drive arm 58 so that it is set in the operating state. In the second end portion 78 is formed a cam slot 82, wherein a cam pin 84 is positioned. The cam pin 84 reduces the influence due to friction, and a roller (not shown) can be employed to provide smoother operation at the slot 82.

Referring to Fig. 13, the cam pin 84 is extended downward from a cam slider 86. The cam slider 86 is so installed in the base 14 in parallel to the rotary shaft of the cover 16 on the base 14 that it is slidable. The cam slider 86 is biased to the left by a tension spring 88. The cam slider 86 has a rider section 90 that contacts a cam surface 92 of the left pivot joint 24A (see Fig. 3), by which the cover 16 is attached to the base 14. When the cover 16 is to be pivoted to the closed from the opened position, the pivot 24A rotates as is indicted by the arrow D. Then, the cam surface 92 drives the rider section 90, the cam slider is shifted to the right, as is indicated by the arrow B, and the tension spring 88 is stretched. When the cover 16 is to be pivoted from the closed position to the opened position, the pivot 24A rotates in the direction opposite to that indicated by D. The tension spring 88 pulls the cam slider 86 in the direction that is opposite to that indicated by B, as the rider section 90 moves along the cam surface 92 to shift the keyboard into the operating position. The force that is provided for arranging the keyboard is only that force which is generated by the tension spring 88. This structure protects the internal mechanism when the extension of a pallet is interrupted. This arrangement is therefore preferable for driving the cam slider 86 directly into the cover at the extended operating position.

As is described above, in Fig. 9 is shown the pallets 26 and 27 that are retained in the storage position when the cover 16 is closed. In this condition, the cam slider 86 and the cam pin 84 are positioned completely to the right by the cam surface 92 of the pivot joint 24A, which acts on the rider section. Fig. 10 is a diagram that depicts the shifting mechanism when the cover 16 is opened. As is apparent from a comparison of Fig. 10 with Fig. 9, the cam pin 84 has been shifted to the left side. Thus, the second drive arm 72 has pivoted as is indicted by the arrow E because the centre section of the cam slot 82 is formed as an angle. Since the pivot 74 is fixed to the base 14, the first end portion 76 of the second drive arm 72 causes the first drive arm 58 to rotate in the direction F. Due to the interaction of the guide pins 44LG and 44RG in the guide slots 46G and 48G, and the interaction of the first guide slot 62 and the second guide slot 66 for the first drive arm 58 with the drive pins 44LD and 44RD of the respective pallets, the left pallet 26 is driven by the first drive arm 58 in the horizontal direction that is indicated by A, and the right pallet 27 is driven by the first drive arm 58 in the horizontal direction B inversely.

The base portion 104, which is connected to the left pallet 26 by means of the hinges 106 and 108, interacts with the left pallet 26 and is shifted in the horizonal direction A. As is shown in Figs. 11 and 12, the base portion 104 is driven upward by the second shelf portion 116 across the slope portion 112 of the lower case 14, which extends from the first shelf portion 114 along the lower face of the base portion 104. As a result, the operating section of the pointing device 30 is raised. It is preferable that a positioner, such as a leaf spring, or an indentation that corresponds to the shape of the base portion 104, be provided for the second shelf portion 116 in order to prevent the pointing device 30 from wobbling while it is being manipulated.

The first drive arm 58 pivots around the pivot pin 56, and the ball section 80 of the second drive arm 72 pivots in the socket area 70 of the first drive arm 58. The shifting route of the pallets is specified by the guide slots 46G and 48G. Since at its centre section the cam slot 82 is formed as an angle, the second pivot arm 72 is turned in the direction E, while the first drive arm 58 is turned farther in the direction F until the guide pins 44LG of the left pallet 26 arrive at the left ends of the guide slots 46G. Thus, the left pallet 26 is halted at the final, operating position for the keyboard assembly 22. The second end portion 64 of the first derive arm 58 is appropriately formed to maintain the left pallet 26 in this position even when the arm 58 is turned farther in the direction F. All of the guide pins 44RG of the right pallet 27 in response to the movement of the arm 58, travel from the first sections 50 of the guide slots 48G along the curved sections 54 into the second sections of the guide slots 48G. Therefore, the right pallet 27 is moved to its farthest outward position in the horizontal direction, and then begins to move forward in the direction that is indicated by C. The two pallets 26 and 27 are shifted sufficiently outward in the horizonal directions A and B, respectively, so that a front edge 97 at a step shaped face 42 of the right pallet is positioned over an edge 96, at a step shaped face 34 of the left pallet, which was previously adjacent to the edge 97. The right pallet 27 can move forward in the direction C with no interruption by the left pallet 26. A gap for the pointing device 30 is defined between the right and left pallets 27 and 26, as it is when they are in the closed position.

The right pallet 27 advances to the final operating position, and the step shape faces 34 and 42 engage each other. The pallets 26 and 27 are then in the operating position, as is shown in Figs. 3 and 6. The cover 16 can be opened from the closed position to an angle of about 180° without moving the pallets 26 and 27.

The shifting of the keyboard assembly 22 from its storage position to its operating position has been explained. To move the keyboard assembly 22 from the operating position to the storage position, a user merely closes the cover. The shifting mechanism automatically shifts the pallets 26 and 27 inversely. First, the right pallet 27 is retracted in the direction that is the opposite of the direction C, and then the two pallets 26 and 27 are moved horizontally toward each other. Following this, as is described in the first embodiment, the base portion 104 is moved to the first shelf portion 114 along the slope portion 112, and as a result, the operating section for the pointing device 30 is lowered.

As is described above, the volume of the unnecessary gap shown in Fig. 14 is about 125 cm³ for a full-notebook PC type, such as a ThinkPad 755CX, and about 100 cm³ for a sub- notebook PC type, such as a ThinkPad 701C. On the other hand, the volume of the unwanted gap shown in Fig. 15 is about 35 cm³ (when the second embodiment is employed) for a full-notebook PC type, such as a ThinkPad 755CX, and about 10 cm³ (when the third embodiment is employed) for a sub-notebook PC type, such as a ThinkPad 701C.

According to the present invention, a compact and light portable PC is provided wherein an unnecessary gap is reduced and an LCD is less damaged at the time of storage.

## Claims

1. A portable computer comprising:
a pointing device having an operating section that is located among a plurality of input keys of a keyboard; and
an elevating and lowering means for raising said operating section of said pointing device higher than said plurality of input keys when said pointing device is to be operated, and for lowering said operating section when it is not to be operated.

2. A portable computer according to claim 1, wherein said elevating and lowering means has means for extending said operating section of said pointing device to a position higher than the tops of said keys on said keyboard, and means for retracting, when it is to be stored, said operating section to a position lower than said tops of said keys on said keyboard.

3. A portable computer according to claim 1, further comprising:
a system body;
a cover that is attached to said system body to be freely opened and closed; and
said keyboard being provided on a top face of said system body, whereby said elevating and lowering means interacts with the opening and closing of said cover to elevate and lower said operation section.

4. A portable computer according to claim 1, wherein said elevating and lowering means includes:
a base portion that is coupled with said keyboard by a hinge and secures a base end of said pointing device; and
an arm portion that moves in such a manner as to elevate and lower said base portion.

5. A portable computer according to claim 3, wherein said elevating and lowering means includes:
a carrier to which a base end of said pointing device is fixed;
a sloped portion for so supporting said carrier that it can be freely shifted; and
interacting means for interacting with said opening and said closing of said cover to elevate and lower said carrier along said sloped portion.

6. A portable computer according to claim 1, wherein said keyboard is divided into a plurality of keyboard sections that can be shifted, and wherein said elevating and lowering means includes:
a base portion that is coupled with one of said plurality of keyboard sections by a hinge and secures a base end of a pointing device; and
a sloped portion for so supporting said base portion that it can be freely shifted, wherein said base portion interacts with a movement of said keyboard section and is elevated and lowered along said sloped portion.

7. A portable computer comprising:
a system body;
a cover that is attached to said system body to be freely opened and closed and that includes an LCD;
a keyboard that is provided on a top face of said system body; a pointing device that is positioned among a plurality of input keys, which constitute said keyboard; and
an elevating and lowering means for effecting a height change of an operating section of said pointing device relative to said keyboard.

8. A portable computer comprising:
a pointing device that is positioned among a plurality of input keys, which constitute a keyboard; and
an elevating and lowering means for effecting a height change of an operating section of said pointing device relative to an input key, from among said plurality of input keys, that are adjacent to said pointing device.

9. A keyboard comprising:
a pointing device that is positioned among a plurality of input keys; and
an elevating and lowering means for effecting a height adjustment of an operating section of said pointing device relative to said plurality of input keys.
